# EUROPEAN PATENT APPLICATION

(11) **EP 0 947 857 A2**
(43) Date of publication of application: **06.10.1999**
(21) Application number: 99200787.2
(22) Date of filing: 12.03.1999
(51) Int. Cl.: G02B 1/04, C08F 4/00, C08F 2/00

(54) **Process for providing an optical element and optical element obtainable by such a process**

(30) Priority: 24.03.1998 EP 98200928
(71) Applicant: Akzo Nobel N.V., 6824 BM Arnhem (NL)
(72) Inventor: Bos, Willem, 6836 JP Arnhem (NL); Breeveld, Ricardo Henry, 6983 HJ Doesburg (NL); Vertommen, Luc Louis Théophile, 6931 VJ Westervoort (NL)
(74) Representative: Duxbury, Stephen

(57) **Abstract**

Process for providing an essentially homogeneous optical element, for example an optical lens, comprising the steps of:
- filling a mould with a mixture comprising one or more monomers, one or more initers, and one or more radical polymerization initiators, the degree of polymerization of the monomers during filling being less than 5 % by weight,
- polymerizing said mixture such that more than 90 % by weight of all monomer is polymerized, and
- removing the essentially homogeneous optical element from the mould.

## Description

The present invention relates to a process for providing an optical element, for example an ophthalmic lens, and to optical element obtainable by such a process.

Monomers for the production of hard transparent polymers for applications in the optical industry for transparent coatings, optical lenses, transparent sheets, light guides and the like, are normally thermally cured with the use of peroxide, azo or other free-radical producing agents.

It is noted that EP-A-0 814 095 discloses a process to produce a half-polymer, with a monomer conversion of from 5 to 90 % by weight, by the polymerization of monomers in the presence of initers. Said half-polymers are then transferred to a mould and further polymerization is initiated to obtain the finished shaped article. The handling of these viscous half-polymers is cumbersome and often leads to inclusion of undesired air bubbles.

WO 96/24620 and WO 98/07758 are examples of patent applications describing the use of initers in the production of polymers, in particular block-copolymers. These references do not relate to processes to make lenses.

An object of the present invention is to provide an improved process for providing optical elements, in particular ophthalmic lenses.

According to an aspect of the present invention there is provided a process for providing an essentially homogeneous optical element, for example an optical lens, comprising the steps of:
- filling a mould with a mixture comprising one or more monomers, one or more initers, and one or more radical polymerization initiators, the degree of polymerization of the monomers during filling being less than 5 % by weight,
- polymerizing said mixture such that more than 90 % by weight of all monomer is polymerized, and
- removing the essentially homogeneous optical element from the mould.

Since the process according to the present invention utilizes monomer transference to the mould instead of half polymers or polymers, the resulting mixture will have a lower viscosity which improves the handling and transportation qualities thereof, and leads to consistently good lenses.

Furthermore, the inventors were surprised that a homogenous optical lens could be provided by such a process utilizing monomers instead of polymers.

According to another aspect of the present invention, there is provided a process for providing an optical clement, for example an ophthalmic lens, comprising the step of exposing a predetermined polymerizable monomer or polymerizable monomer mixture to a stable free radical initer under polymerizing conditions, wherein the stable free radical preferably comprises a nitroxyl free radical.

The inventors have found that this process enables the provision of good optical elements. The inventors theorize that the carbon central radical of the initer initiates a controlled insertion polymerization, where the rate constant of polymerization is controlled by the stable free radical itself rather than by the monomers, which is the case with known radical polymerization processes for producing optical elements. Accordingly, the stable free radical controls co-polymerization when more than one monomer is used in the process according to the present invention, which gives rise to a good control of the chemical composition of the polymer formed and an improved control of the polymer exotherm evolving during polymerization. This yields the advantage that monomer compositions obtained according to the process according to the present invention arc less sensitive to the conditions under which they are cured, which results in a more robust and stable polymerization process. Furthermore the time of the thermal cure can be shortened whereby an optical element exhibiting good optical homogeneity is still obtained.

The term "initer" as used herein defines compounds that can initiate and control a polymerization reaction by thermal decomposition, optionally in the presence of an accelerator. The initer must be capable of forming, upon thermal decomposition, two radical fragments of which one must have the predominant tendency to initiate the polymerization reaction, i.e. by forming a stable covalent bond with a monomer molecule thereby transferring the radical to said monomer, whereas the other radical fragment is predominantly a stable free radical as is known in the art. It is believed that the carbon-centered radical formed upon decomposition initiates the polymerization, whereas the nitroxide radical will function as a stable free radical, terminating the growing chain. Without the invention being limited to such a theory, it is further believed that the termination reaction is reversible at the polymerization temperature, so that monomers can be inserted between the last monomeric unit and the nitroxide moiety of the initer. This sets these types of compounds apart from regular chain transfer agents which terminate a growing chain and, subsequently, initiate a new, separate chain.

The term "optical element" denominates articles that can be used to produce ophthalmic lenses, including sheets of polymerized material from which one or more ophthalmic lenses can be formed. Preferably, the optical element is an ophthalmic lens, being either a corrective lens or a non-corrective lens, such as used in sunglasses. The ophthalmic lenses may be finished or unfinished, the latter also being known in the art as blanks. Such blanks are machined to obtain the final shape. A finished lens is a type of lens for which the final shape is determined by the dimensions of the mould from which it is taken. This requires that the product of the polymerization casting of the finished lens meet the end-product specifications, since there are no further processing steps to correct defects in the lens. The lenses may be untinted, photochromic or tinted (for use in sunglasses). It is noted that tinting is typically done by means of surface impregnation, also known as imbibing, in which process the ophthalmic lenses are immersed in aqueous dispersions of dyes. The process according to the invention is preferably used to produce ophthalmic lenses, more preferably finished ophthalmic lenses, and most preferably tinted finished ophthalmic lenses.

The initer preferably comprises at least one moiety according to formula (I) or (II), 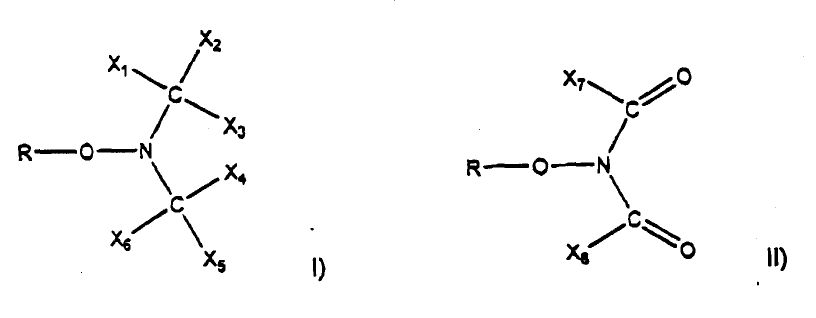 wherein:
- R represents a group which has at least one carbon atom and is such that the free radical R· is capable of initiating the free radical polymerization of unsaturated monomers;
- at most five of the groups represented by X₁-X₆ are the same or different linear or branched, substituted or unsubstituted (cyclo)alkyl groups, and/or two or more of the groups X₁-X₆ may be linked to form cyclic structures comprising the -CNC-moiety,
- the complementary groups X₁ through X₆ are functional groups independently selected from substituted or unsubstituted aryl, cyano, nitro, dialkoxyphosphonyl, R'O-, R'OC(O)-, R'C(O)O-, R'C(O)OC(O)-, R'R'NC(O)-, R'C(O)NR'-, R'C(O)NR'(O)-, and R'C(O)-, wherein each of R' is, independently, hydrogen or a substituted hydrocarbyl group, or, alternatively, -CX₁X₂X₃ and/or -CX₄X₅X₆ represent a substituted or unsubstituted aryl group,
- X₇ and X₈ are independently selected from alkyl, aryl, alkaryl, and aralkyl, while X₇ is optionally linked with X₈ to form bridged structures, and
   is combined with a monomer composition to be polymerized.

The hydrocarbyl groups R' may independently be either alkyl, aryl, alkaryl, aralkyl, and/or cycloalkyl. Preferably, the substituted or unsubstituted hydrocarbyl group contains less than 30, more preferably less than 15, atoms.

Preferred examples of carbonyl containing functional groups are ester, carboxyalkyl, aldehyde, anhydride, and ketoalkyl groups.

Although X₁-X₆ may be linked to form cyclic structures, they preferably are not so linked. Also, it is preferred that each of X₁-X₈ contains fewer than 30 carbon atoms. More preferably, each of X₁-X₈ contains fewer than 10 carbon atoms in order to produce initers with a low molecular weight. Most preferably, at most five of X₁-X₆ are independently selected from methyl, ethyl, propyl, isopropyl, butyl, sec. butyl, tert. butyl, and cyclohexyl. X₇ and X₈ are preferably linked. More preferably, X₇ and X₈ are part of one substituted or unsubstituted phenyl or naftyl group. Most preferably, X₇ and X₈ are part of one phenyl group.

Furthermore, it is preferred that the process involves initers with a moiety of formulae I or II, with the functional group being selected from phenyl, cyano, dialkoxyphosphonyl, carboxyalkyl, and ester. More preferred is a process where the initer possesses a cyano, phenyl, eater or dialkoxyphosphonyl group. Even more preferred, is a process where the initer possesses a cyano or phenyl group. Most preferred is a process with at least one initer with a cyano moiety. Preferably, these initers can be produced without toxic by-products being formed. In this respect, it is noted that initers derived from 2,2'-azobis(isobutyronitril) are less favoured because the toxin tetramethylsuccinonitril is a known decomposition product of this material.

Non-limiting examples of functional groups of the initer preferably further include methylether, ethylether, propylether, butylether, poly(alkylether), methylketone, ethylketone, propylketone, isopropylketone, butylketone, isobutylketone, tert. butylketone, diethoxyphosphonyl, ethoxypropoxyphosphonyl, dipropoxyphosphonyl, dibutoxyphosphonyl, diisobutoxyphosphonyl, -C(O)OCH₃, -C(O)OC₂H₅, and C₁-C₂₀ carboxylic acid esters.

The R group may bear one or more of the ONC(X₁₋₃)C(X₄₋₆) functions as long as each of the radicals R· formed upon scission of one or more of the R-O bonds is capable of initiating the free radical polymerization of an unsaturated monomer. Furthermore, in the first instance it is preferred that R is not of a polymeric nature, meaning that R preferably does not comprise more than approximately 4 recurring units incorporated by radically polymerizing one or more unsaturated monomers. Preferably, R does not contain more than two of such recurring units. Most preferred are compounds wherein R equals C(X₁₋₃) or C(X₄₋₆). However, the polymer that results from the polymerization process can be reused as an initer according to the invention. Therefore, R is not limited to a non-polymeric group.

Particularly preferred initers are tris(1-cyano-1-methylethane)hydroxylamine ((IBN)₃NO) having the following chemical structure: 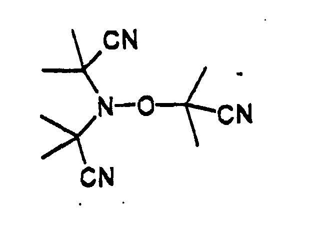 and tris(2-methoxy-1,1-dimethyl-2-oxoethyl)hydroxylamine, designated (MIB)₃NO, having the following chemical structure:

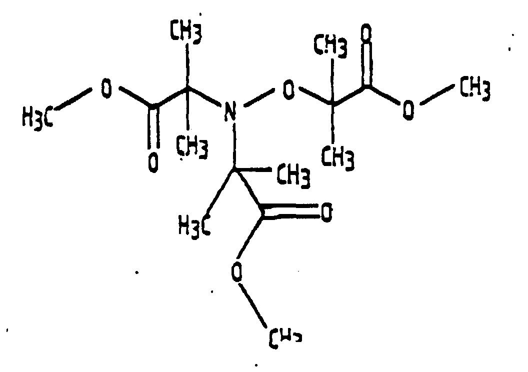

These initers are capable of polymerizing a wide range of different monomer types and multi component systems with very good reaction control at concentrations that can range over a factor of 200. The resulting lenses are homogeneous and curing does not show thermal runaways as is seen for standard thermal initiators. This means that the delicate balance between monomer composition, initiator type and amount and the thermal cure cycle used, can be surpassed.

The monomer compositions may contain upto 99.995% monomer. These monomers may be acrylic, vinylic or allylic or may be thiol compounds. Examples include methyl (meth)acrylate, phenyl (meth)acrylate, vinyl benzoate, benzylmethacrylate (acrylic), diallyl isophthalate, diallyl terephthalate, diallyl adipate, triallyl cyanurate, pentaerythritol tetrakis (3-mercaptopropionate) trimethylolpropane tris (3-mercaptopropionate), pentaerythritol tetrakis (3-mercaptoacetate), tris(2-hydroxyethyl)isocyanurate triacrylate, trimethylolpropane tris(3-mercaptoacetate), 2-mercaptoethylsulfide, 4,4'-thiodibenzenethiol, benzenedithiol, glycol dimercaptoacetate, allylmethacrylate, ethane-, propane-, butane-, hexane-, heptanedioldi(meth)acrylate, ethoxylated and propoxylated di(meth)acrylates like ethylene-, diethylene-, triethylene-, tetraethylene-, polyethyleneoxide di(meth)acrylate; propylene-, dipropylene- tripropylene-, tetrapropylene-, polypropyleneoxide di(meth)acrylate; urethane(meth)acrylates and trimethylolpentane-tri(meth)acrylate, and mixtures thereof.

Examples of vinyl monomers include α-olefins; isoprene; butadiene; styrene, acrylonitrile; vinyl chloride; vinyl esters of organic acids, much as vinyl acetate and vinyl stearate; (alkyl)(di)(meth)acrylicacid or esters thereof, such as vinyl phosphonic acid or esters thereof; vinyl pyridine; vinyl alkyl ethers, such as vinyl methyl ether and vinyl isobutyl ether; and other vinyl aromatic compounds or derivatives thereof, such as styrene phosphonic acid, styrene phosphonic esters, vinyl toluene, vinyl xylene, 2,4-dimethylstyrene, 2,5-dichlorostyrene, 2-methyl-4-chlorostyrene, and the like; and mixtures thereof.

The methacrylate compounds preferably have the general structure: 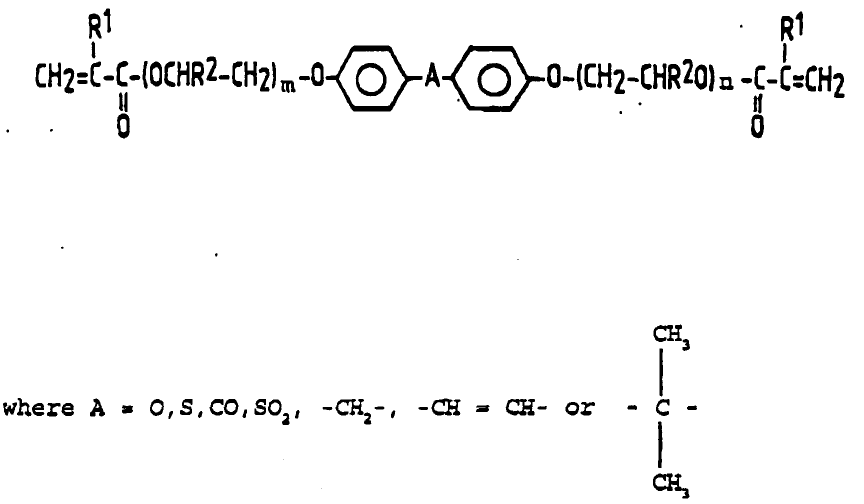 R¹ and R² are H or CH₃
and n, m are independent integers from 1 to 6.

The process according to the present invention furthermore may comprise exposing the monomer or monomer mixture to the stable free radical in the presence of a chain transfer agent.

The chain transfer agent used in the present invention is an organic compound having a chain transfer coefficient of at least 0.5 at 50-60°C with acrylic monomer or styrenic monomer. The chain transfer agent is employed in an amount which is effective to provide a substantially striation-free copolymer composition. This amount will depend upon the chain transfer coefficient(s) of the chain transfer agent. In most circumstances, an amount of 0.005 to 1.0 wt% of the total composition is useful, and more preferably an amount of 0.05 to 0.5 wt% of the total composition is used.

Particular chain transfer agents which have been found suitable for use in the present invention include α-bromomethylstyrene, ethyl-2-bromomethylpropenoate, tetrabromomethane and trichlorobromomethane.

It has been found that by employing the particular chain transfer agents in the process of the present invention, one obtains a substantially striation-free copolymer having substantially less optical strain than similar polymers prepared in the absence of chain transfer agent or prepared with other chain transfer agents. This provides the ability to make optical elements from polymers with better optical transmission properties than was previously possible and also allows the casting of thicker lenses since the optical strain in such lenses can be essentially eliminated by the present process.

The terms "substantially striation-free" and "substantially less optical strain" as used herein can be equated to the term "essentially homogeneous". The homogeneity of lenses is, as is usual in the art, determined by visual inspection of said lens after it has been inserted between two polarizing plates with perpendicular polarization direction, which plates are back-lighted by a light source. A lens is considered to be essentially homogeneous when said lens gives an image that the skilled person would classify as being essentially void of defects which show as streaks of dark and light regions.

It has also been found that the use of chain transfer agents in the process of the present invention does not adversely effect other properties of the resultant copolymer. Thus, for example, the surface hardness, impact resistance and coloration of the copolymers produced by the present process, are all suitable for the fabrication of optical elements, including thick lenses for glasses.

The polymerizing conditions of the process according to the present invention preferably comprise a thermal curing cycle carried out at a temperature of between 30 and 130°C, preferably 50 and 120°C.

After said curing cycle, more than 90, preferably more than 93, and most preferably more than 95% by weight of all polymerizable monomer groups will have reacted. Because the monomer mixture used in producing the lenses according to the invention typically comprises at least one or more monomers with two, three or more polymerizable groups in each molecule, this means that the lenses after being formed will be essentially free of unreacted monomer.

The inventors have found that the length of time for the thermal cure can be shortened with respect to known processes whereby an optical element is provided which still exhibits a good optical homogeneity.

The thermal cure cycle can have a duration of about 1-24 hours, preferably about 5-21 hours.

According to another aspect of the present invention, there is provided an optical element obtainable according to the above process.

The inventors have found that such elements, in particular ophthalmic lenses have a good tinting hardness, a good homogeneity, a low yellowness index and exhibit substantially no cracking. Moreover, coatings comprising unsaturated functional groups applied to an optical element obtainable according to the present invention, can be thermally cured without addition of an initiator whereby a good adhesion to the optical element of the coating is secured.

Furthermore, the process according to the present invention enables lower amounts of the initer to be used when compared to processes using peroxides and azo-initiators for example, enables optical elements to be produced having a better compatibility with photochromic dyes, and enables a good homogeneity of lenses to be produced without the use of a chain transfer agent.

The radical polymerization initiators as used in the present invention can be of any conventional type, such as organic peroxides, azo-initiators, and photo initiators. Examples of suitable organic peroxides include peroxydicarbonates, such an Perkadox® 16, peroxyesters, peroxyketals, such as Trigonox® 29, diacyl peroxides, and the like. Examples of azo-initiators include Perkadox® AMBN and Perkadox® AIBN. Photo initiators that can be used are of any conventional type, typically containing benzophenone groups. In order to initiate the polymerization of a monomer mixture comprising these initiators, the mixture is subjected to appropriate heating or exposing to UV light, causing the initiator to generate the radicals that initiate the polymerization.

Apart from this, the initiator/monomer mixture has a restricted pot-life. If not used within the applicable pot-life, the monomer initiator mixture forms a viscous gel which can no longer be cured to provide a desired product.

Known mixtures are often refrigerated, but this is economically undesirable, and also increases the time needed to condition the monomer initiator mixture to the starting temperature of the thermal cure to the final product.

The monomer/initer mixture according to the present invention exhibits a lower tendency to form a gel than known monomer/initiator mixtures, whereby this has a longer pot-life.

The polymerizable composition of the present invention may contain additives such as a polymerization promoter, a polymerization moderator, a mould release agent, an ultraviolet light absorbent, an anti-oxidant, a colouring preventor, an antistatic agent, a fluorescent dye, a photochromic dye, a colour dye, a hindered amine light stabilizer, a pigment and a perfume as required for imparting desirable functions,

The invention will now be further described by way of the following experimental data, and figures wherein:
- figure 1 shows a graph of various curing cycles, wherein:
   - A =: Oven reference
   - B =: 0.1 % Trigonox 29 cured
   - C =: (IBN)₃NO (0,1%) cured D121 + 20% STY
   - D =: Oven reference
   - E =: 0,2% Trigonox 29 cured (severe crack through extreme exotherm),
- figure 2 shows a graph of the measured viscosity for a mixture according to the present invention measured over a period of 16 weeks at 50°C.

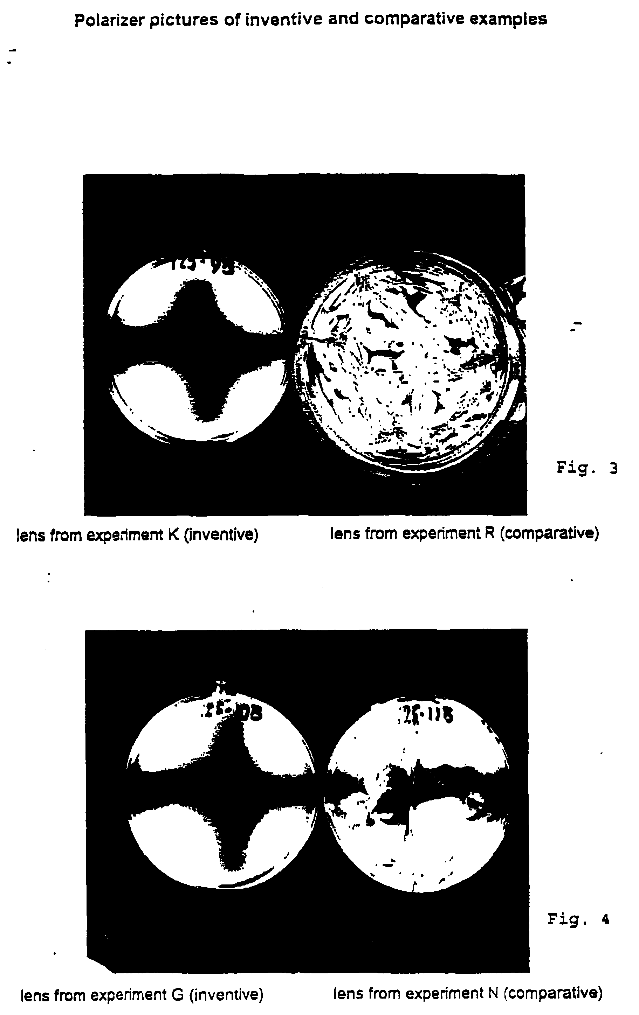

- figure 3 shows a photograph of a lens obtained from the mixture according to the present invention from experiment K when compared to a lens obtained from a mixture from experiment R, and
- figure 4 shows a photograph of a lens obtained from the polymer according to the present invention from experiment G compared to the comparative example of a lens obtained from the comparative polymer composition N.

### Experimental

### Curing

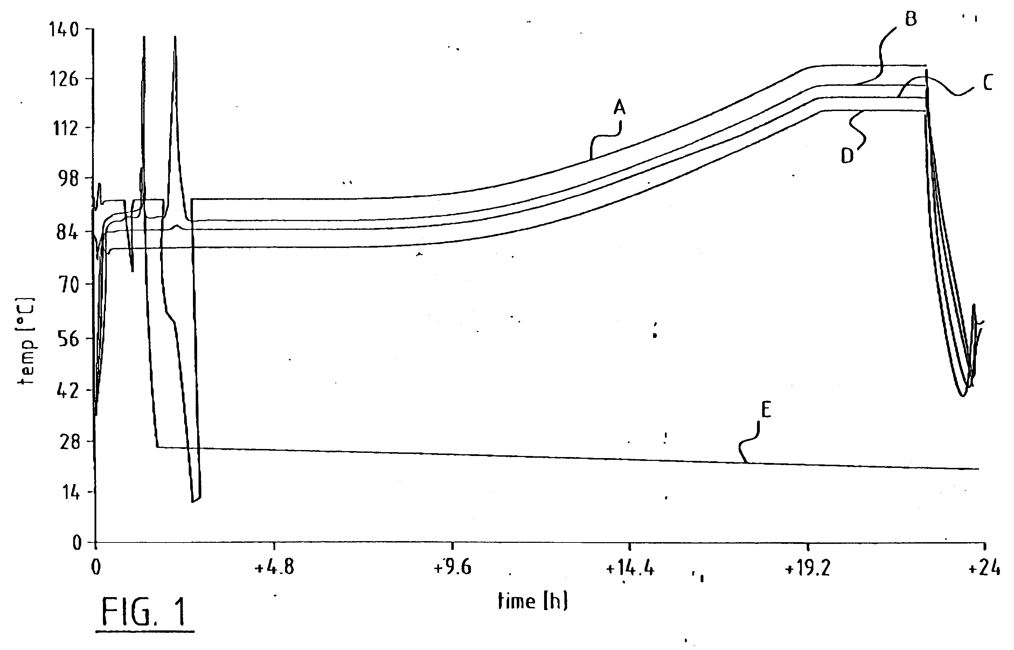

A number of mixtures according to the present invention and a number of comparative examples were formulated, these being shown in figure 1.

These mixtures were cured in glass molds as is standard in the lens casting industry.

The castings were subjected to a thermal cure in an air ventilated oven. After curing, the castings were recooled to 60°C and demolded. The following cure cycles were applied for each of the initers.

For Trigonox 29, (IBN)₃NO and (MIB)₃NO: cure at 83°C for 4 hours, linear ramp to 86°C over 6 hours, linear ramp to 101°C over 8 hours, linear ramp to 120°C over 2 hours and finally leave at 120°C for 2 hours.

For Perkadox 16S: cure at 35°C for 10 hours, linear ramp to 60°C over 6 hours, linear ramp to 90°C over 3 hours and finally hold at 90°C for 4 hours.

The resulting polymers were investigated for homogeneity, tinting hardness, yellowness index and cracking, the results being shown in tables 1 and 2 here below.

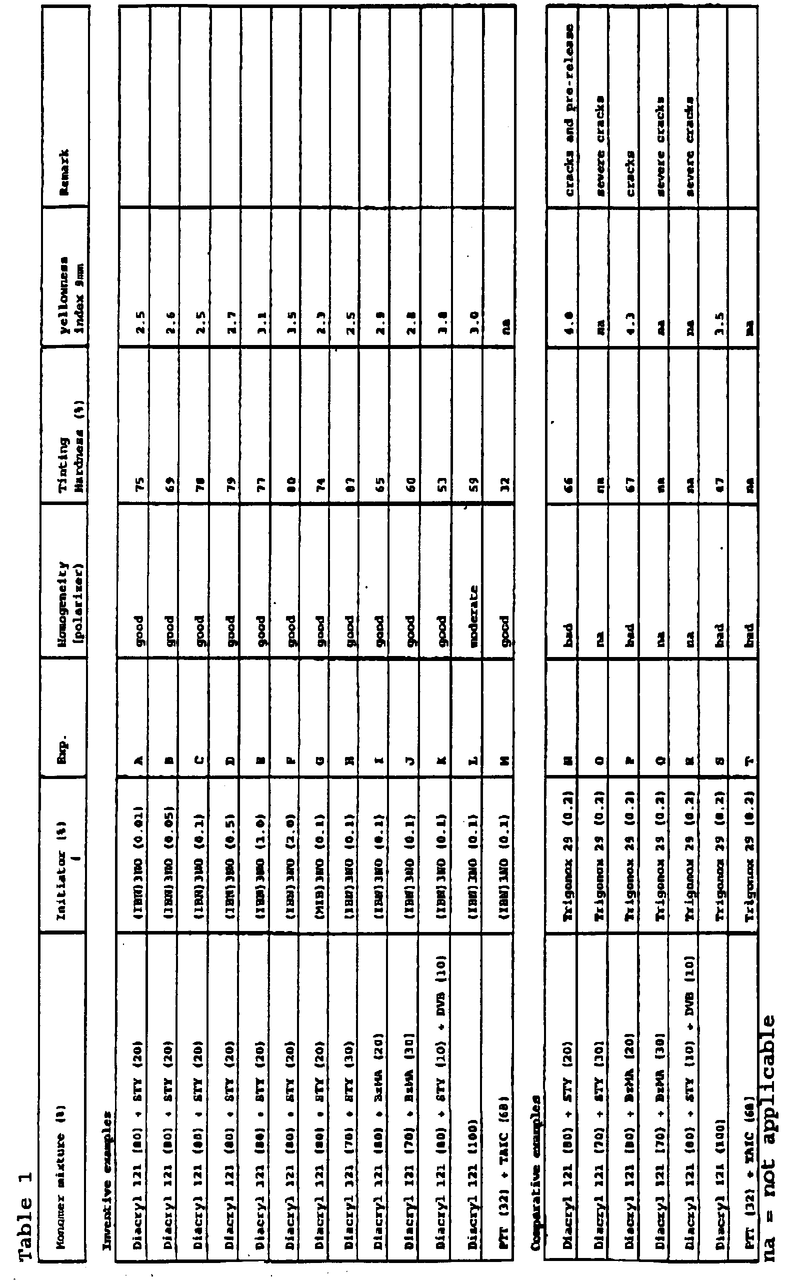

**Table 2**

| Monomer mixture (%) | Initiator (%) | Exp. | Homogeneity (polarizer) | Tinting Hardness (%) |
|---|---|---|---|---|
| | | | | |

| Comparative examples | | | | |
|---|---|---|---|---|
| Diacryl 121 (80) +STY (20) | Px16S (0.3) | U | bad | 45 |
| Diacryl 121 (80) +STY (20) | Px16S (0.1) | V | bad | 36 |
| Diacryl 121 (80) +STY (20) | AMBN (0.2) | W | bad | 50 |
| Diacryl 121 (80) +STY (20) | AMBN (0.05) | X | bad | 44 |
| Diacryl 121 (70.6) +STY (20) +C12SH (0.4) | AMBN (0.2) | Y | moderate | 47 |

Chemical structures of Trigonox 29, AMBN, Perkadox 16, as well as a key to the abbreviations shown in Tables 1 and 2 are shown below.

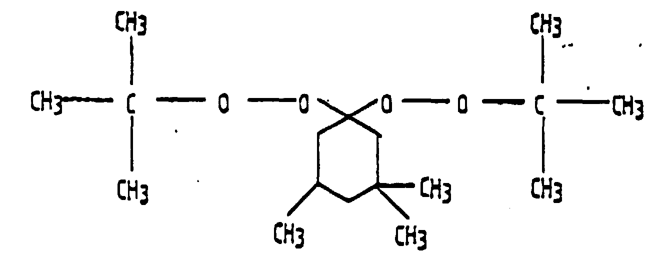

### 1,1-Bis(tert-butylperoxy)-3,3,5-trimethylcyclohexane

### Trigonox 29-

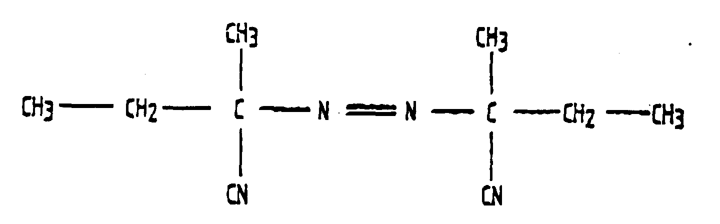

### 2,2'-Azobis(2-methylbutyronitrile)

### AMBN

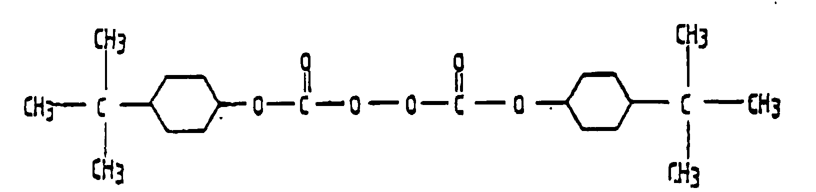

### Bis(4-tert-butylcyclohexyl) peroxydicarbonate

### Perkadox 16

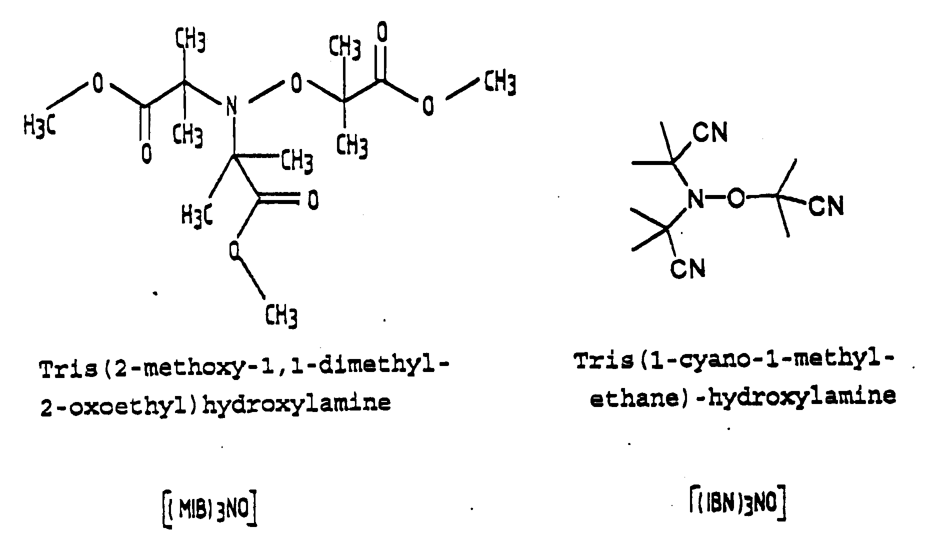

STY = styrene
BzMA = benzylmethacrylate
DVB = divinylbenzene
PTT = propanetrithiol
TAIC = triallyltriisocyanurate
C12SH = dodecylmercaptane
AMBN = 2,2'-azobis-2-methylbutyronitrile
Trigonox 29 = 1,1-bis(t-butylperoxy)3,3,5-trimethylcyclohexane
Perkadox 16S = bis(4-t-butylcyclohexyl)peroxydicarbonate
(IBN)₃NO = tris(1-cyano-1-methylethane)hydroxylamine
(MIB)₃NO = tris(2-methoxy-1,1-dimethyl-2-oxoethyl)hydroxylamine

- Diacryl 121 :: tetraethoxylated bisphenol-A-dimethacrylate, a product of Akzo Nobel, having the following structure:

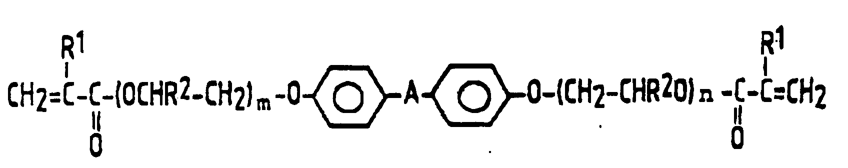

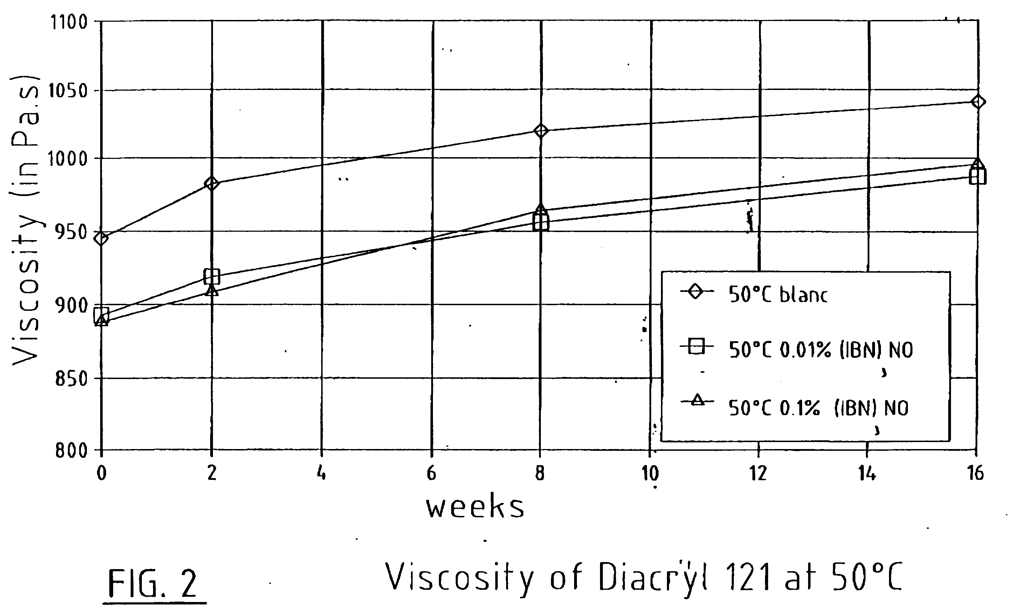

The stability of mixtures of (IBN)₃NO and 0.01% diacryl 121 and (IBN)₃NO and 0.1% diacryl 121 was investigated by measuring the increase in viscosity of the mixtures over time. The results are shown in Table 3 below and figure 2.

**Table 3**

| Weeks | 50°C blanc | 50°C 0.01% (IBN)₃NO | 50°C 0.1% (IBN)₃NO |
|---|---|---|---|
| 0 | 945 | 895 | 893 |
| 2 | 980 | 922 | 914 |
| 4 | 992 | | 932 |
| 8 | 1020 | 955 | 963 |
| 16 | 1040 | 985 | 995 |

The following conclusions are drawn from the experimental results:
- Initers can be used in a very broad range of concentrations:
   In inventive examples A to F (table 1) a wide range of application is shown for concentrations ranging from 0.01% to 2%, a 200 fold range. In all cases the tinting hardness indicates a good conversion and surprisingly, is constant within experimental error, even for the lower amounts of initer.
- A wide variety of monomer types, both pure and mixtures can be polymerized using initer:
   Inventive examples H to M show good tinting hardness when using initer for thermally curing (meth)acrylates, vinylics, and mixtures thereof and thiol-ene systems.
- Good homogeneity:
   Examples A to M support the surprising observation that monomer systems cured with initer show good homogeneity. Comparative examples N to X, cured with regular peroxide and azo initiators all show bad homogeneity. Comparative example Y shows that such monomer formulations can be made homogeneous with the addition of chain transfer agent. Examples A to G show clearly that such additions of chain transfer agents are not needed when using initer.
- Reduction of exotherms during curing:
   Temperature monitoring inside the mold during curing, as presented in figure 1, show that initers have a good control of the rate of reaction. Comparative curves for 0.1 and 0.2% Trigonox 29 show extreme exotherms, resulting in cracks in the polymer material, as is also shown by comparative examples N to S in table 1.
- Improved conversion
   By better reaction control, the conversion of the polymerization reaction is also improved. This is shown by comparing example L with comparative example S. The tinting hardness of this homopolymer, using the identical cure cycle, is lifted from 47 to 59% by using initer, indicating a tighter polymer matrix which has reacted to higher conversion.
   For the copolymer systems, comparing examples A to D of the present invention with comparative examples U to X, it is seen that the tinting hardness is much higher for the initer cured samples.
- Low yellowness index:
   Examples A to D of the present invention show that a low yellowness index can be obtained compared to comparative example N cured with the same thermal cure cycle. The same comparison can be made between examples I and L of the present invention compared to examples O and R respectively.
   Example G shows another type of initer to perform equally well comparing with example B.
- Monomer stability:
   Figure 2 and table 3 show that compared to a blanc reference run at 50°C an identical viscosity increase was found for Diacryl 121 with 0.1% (IBN)₃NO during 20 weeks.
- Improved coating adhesion:
   Thermal cure of unsaturated acrylic, methacrylic or vinylic coating, performed with an optical element cured with initer prior to the coating operation, can be carried out without addition of initiator. The advantage is that the coating layer is covalently bound to the lens material, resulting in very good adhesion.
- Photodye compatibility:
   Ophthalmic lenses according to the present invention exhibit a good compatibility with photochromic dyes.
   The present invention is not limited to the above description; the requested rights are rather determined by the following claims.

## Claims

1. Process for providing an essentially homogeneous optical element, for example an optical lens, comprising the steps of:
- filling a mould with a mixture comprising one or more monomers, one or more initers, and one or more radical polymerization initiators, the degree of polymerization of the monomers during filling being less than 5 % by weight,
- polymerizing said mixture such that more than 90 % by weight of all monomer is polymerized, and
- removing the essentially homogeneous optical element from the mould.

2. Process according to claim 1, wherein the initer forms a nitroxyl stable free radical.

3. Process for providing an optical element comprising the step of exposing a predetermined polymerizable monomer, or polymerizable monomer mixture, to a stable nitroxyl free radical initer under polymerizing conditions, wherein the initer comprises at least one moiety according to formula (I) or (II) 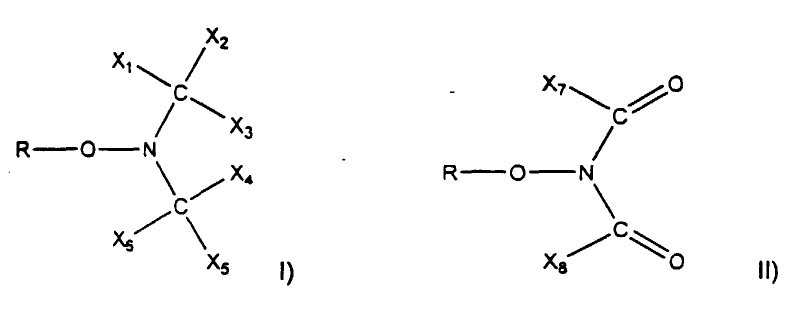 wherein:
• R represents a group which has at least one carbon atom and is such that the free radical R· is capable of initiating the free radical polymerization of unsaturated monomers;
• at most five of the groups represented by X₁-X₆ are the same or different linear or branched, substituted or unsubstituted (cyclo)alkyl groups, and/or two or more of the groups X₁-X₆ may be linked to form cyclic structures comprising the -CNC-moiety,
• the complementary groups X₁ through X₆ are functional groups independently selected from substituted or unsubstituted aryl, cyano, nitro, dialkoxyphosphonyl, R'O-, R'OC(O)-, R'C(O)O-, R'C(O)OC(O)-, R'R'NC(O)-, R'C(O)NR'-, R'C(O)NR'(O)-, and R'C(O)-, wherein each of R' is, independently, hydrogen or a substituted hydrocarbyl group, or, alternatively, -CX₁X₂X₃ and/or -CX₄X₅X₆ represent a substituted or unsubstituted aryl group,
• X₇ and X₈ are independently selected from alkyl, aryl, alkaryl, and aralkyl, while X₇ is optionally linked with X₈ to form bridged structures, and
is combined with a monomer composition to be polymerized.

4. Process according to claim 3, wherein the hydrocarbyl groups R' are independently alkyl, aryl, alkaryl, aralkyl, and/or cycloalkyl, wherein the substituted or unsubstituted hydrocarbyl group contains less than 30, preferably less than 15, atoms.

5. Process according to claims 3 or 4, wherein the complimentary functional groups X₁ to X₆ are selected from substituted or unsubstituted phenyl, cyano, ether and carbonyl containing groups, such as ester, anhydride and keto-aryl groups.

6. Process according to any of the previous claims 3-5, wherein the nitroxyl-free radical initers are (MIB₃)NO and/or (IBN₃)NO.

7. Process according to any of the previous claims, wherein the monomer or monomers are selected from the group consisting essentially of acrylic, vinylic, allylic or thiol compounds.

8. Process according to claim 7, wherein the monomers comprise methyl(meth)acrylate, phenyl (meth)acrylate, vinyl benzoate, benzylmethacrylate (acrylic), diallyl isophthalate, diallyl terephthalate, diallyl adipate, triallyl cyanurate, pentaerythritol tetrakis (3-mercaptopropionate), trimethylolpropane tris(3-mercaptopropionate), pentaerythritol tetrakis (3-mercaptoacetate), tris(2-hydroxyethyl)isocyanurate triacrylate, trimethylolpropane tris(3-mercaptoacetate), 2-mercaptoethylsulfide, 4,4' -thiodibenzenethiol, benzenedithiol, and glycol dimercaptoacetate, and mixtures thereof and α-olefins; isoprene; butadiene; styrene, acrylonitrile; vinyl chloride; vinyl esters of organic acids, such as vinyl acetate and vinyl stearate; (alkyl)(di)(meth)acrylicacid or esters thereof, such as vinyl phosphonic acid or esters thereof; vinyl pyridine; vinyl alkyl ethers, such as vinyl methyl ether and vinyl isobutyl ether; and other vinyl aromatic compounds or derivatives thereof, such as styrene phosphonic acid, styrene phosphonic esters, vinyl toluene, vinyl xylene, 2,4-dimethylstyrene, 2,5-dichlorostyrene, 2-methyl-4-chlorostyrene, and the following monomers: allylmethacrylate, ethane-, propane-, butane-, hexane-, heptanedioldi(meth)acrylate, ethoxylated and propoxylated di(meth)acrylates like ethylene-, diethylene-, triethylene-, tetraethylene-, polyethyleneoxide di(meth)acrylate; propylene-, dipropylene- tripropylene-, tetrapropylene-, polypropyleneoxide di(meth)acrylate; urethane(meth)acrylates and trimethylolpentane-tri(meth)acrylate, and mixtures thereof.

9. Process according to claim 8 wherein the methacrylate compounds preferably have the general structure: 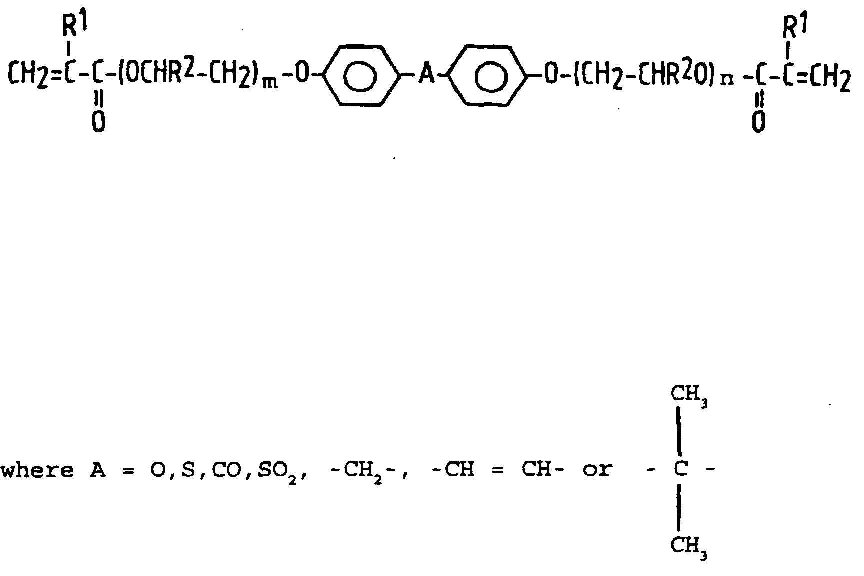 R¹ and R² are H or CH₃
and n, m are independent integers from 1 to 6.

10. Process according to claim 9, wherein the monomers consist essentially of a mixture of diacryl-121, styrene and/or benzylmethacrylate.

11. Process according to any one of the previous claims wherein the mixture further comprises a chain transfer agent.

12. Process according to claim 11, wherein the chain transfer agent is selected from α-bromomethylstyrene, ethyl-2-bromomethylpropenoate, tetrabromomethane and trichlorobromomethane.

13. Process according to any of the previous claims carried out at a curing temperature of 30-130°C, preferably 50 and 120°C.

14. Process according to any of the previous claims wherein the stable free radical is present in a % wt range from about 0.005-5 parts per 100 monomers, preferably about 0.01-2 parts per 100 monomers.

15. An optical element obtainable according to any of the previous claims.
